# EUROPEAN PATENT SPECIFICATION

(11) **EP 1 916 433 B1**
(45) Date of publication and mention of the grant of the patent: **17.03.2010**
(21) Application number: 06301085.4
(22) Date of filing: 24.10.2006
(51) Int. Cl.: F16D 13/12

(54) **Friction Clutch and Sunblind Drive**
Reibungskupplung und Jalousiantrieb
Embrayage à friction et entrainement de jalousie

(43) Date of publication of application: 30.04.2008
(73) Proprietor: Dunkermotoren GmbH, 79848 Bonndorf/Schwarzwald (DE)
(72) Inventor: AMANN, Thomas, 79865, Grafenhausen (DE); SELB, Egon, 79865, Grafenhausen (DE)
(74) Representative: Dreiss

(56) References cited:
- EP-A- 1 201 951
- EP-A- 1 630 436
- WO-A-03/029680
- FR-A1- 2 556 427
- GB-A- 1 014 113
- GB-A- 1 476 872
- SE-C- 146 527
- US-A1- 3 363 478

## Description

The invention relates to a friction clutch for coupling a first shaft or disk to a second shaft or disk with limited moment of force, as well as to a sunblind drive.

The invention has been made in connection with sunblind drives. In order to be more demonstrative, the problem will be described with reference to such drives. As it will become apparent, that similar problems occur also in other connection, it is clear, that also the solution found can be used in other connection.

With the sunblind drives forming the basis for this invention there are four cam plates for activating two end position switches at the upper and lower end position. Each cam plate has one notch for activating a switch. The cam plates and switches are arranged such that a switch will only be activated, when the notches of two assigned cam plates synchronously allow the switch to activate. The cam plates are driven by one-stage gears, the inputs of which are driven by the sunblind drive. The two gears belonging together are different to the effect that only after 70 revolutions of one of the disks both notches again have the same positions. These 70 revolutions correspond to the maximum length of the sunblind.

When adjusting the end position switches the sunblind is driven to the respective end position and stopped there manually. In doing so the respective outer cam plates are fixed using a slide such that the cams coincide exactly. In this situation the outer cam plates are not driven by the gears, whereas the inner cam plates are driven by the gears. This is affected by the friction clutch. When the wanted end position is reached, the drive is stopped manually (e.g. by hand cable) and the end position is set as soon as the rotational direction is changed. Thereby the fixing of the outer cam plates disengages and they too will be driven again by the gears.

Afterwards the switches shall be driven only by the gears. That means that during normal operation the cam plates shall be fixed to the gears, while when adjusting such fixed fastening shall be overridden manually. This is done by interconnected friction clutches.

The friction clutches used hitherto suffer from not providing exact concentricity.

This problem according to the invention is solved by a friction clutch according to the teaching of claim 1 and a sunblind drive according to the teaching of claim 4.

With such a friction clutch a number of springs is arranged equally between the two disks or shafts.

It is to be noted that the use of corrugated sheets of metal as springy elements between an inner and an outer circular element to hold them concentric is known as such. Such sheets are used to connect both elements in firm contact to transfer high torque even when having high differences in thermal coefficients of expansion and being exposed to high temperature ranges (US 3, 363, 478). Sometimes (FR 2 556 427) it is even recommended to also corrugate either of the circular elements to improve the force closure towards a form closure.

Further embodiments of the invention are to be found in the subclaims and the enclosed description.

In the following the invention will be described with reference to the accompanying drawing:

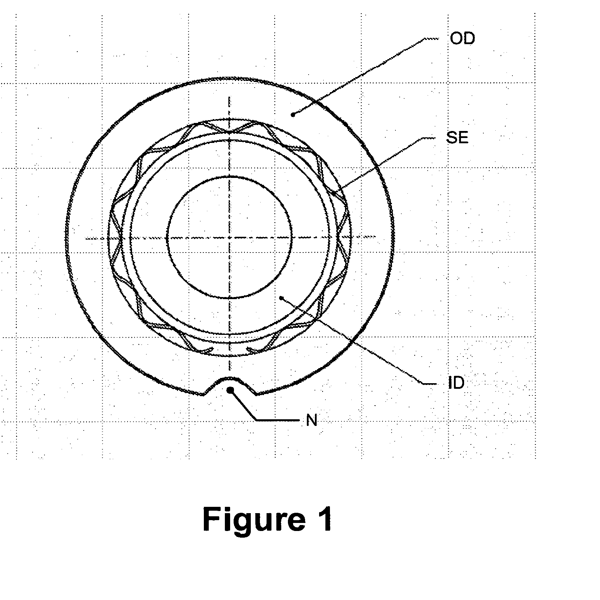

- Figure 1: shows a friction clutch according to the invention for a sunblind drive according to the invention.

Based on figure 1 a friction clutch according to the invention for a sunblind drive according to the invention now will be described in more detail.

Figure 1 shows an inner disk ID, an outer disk OD, and a springy element SE in between. The outer disk OD carries a notch N.

In the given example the inner disk ID has an outer diameter of some 12.5 mm and is about 4 mm thick. It extents from a wheel that is a guidance also for the outer disk OD. This outer disk OD has an inner diameter of some 14 mm and also is about 4 mm thick. So the gap between the two disks lies in the range of 0.7 mm. The springy element SE in this example is made of a springy sheet metal with some 0.3 mm thickness. It is corrugated such that it meanders between the two disks more or less along the whole circumference of this gap. So in principle it behaves as a number of like springs equally distributed along the whole circumference of this gap.

When the springy element is made of a springy sheet metal, as in this example, it cannot tilt, but in principle it could migrate. In the given example this is hindered in one direction by the wheel from which the inner disk ID extends and in the other direction by the next friction clutch.

In this example the springy element is very small and in principle could be replaced also by a springy element made out of a spring wire. As a wire in principle could tilt, a narrower kind of guidance would be recommended, for example small rills both in the inner surface of the outer disk OD and in the outer surface of the inner disk ID.

It is clear that such solution could be used also as a friction clutch between the outer surface of a shaft and the inner surface of a hollow shaft or between a shaft and a disk.

The springy element of course could be made also from another springy material like plastics. Also for the disks or shafts any appropriate material could be used.

Of course instead of one springy element also two or more could be used, where each of them only covers part of the circumference.

## Claims

1. Friction clutch for coupling a first shaft or disk (ID) to a second shaft or disk (OD) with limited moment of force, wherein the shafts or disks (ID, OD) are arranged within one another in a coaxial manner, including a springy element (SE) connecting both shafts or disks, wherein the springy element (SE) is located between the first shaft or disk (ID) and the second shaft or disk (OD) and appears as corrugated line in a section plane lying perpendicular to the common axis and capturing almost the whole circumference.

2. Friction clutch according to claim 1, **characterized in, that** the springy element (SE) is a springy sheet metal corrugated in the direction of the common axis.

3. Friction clutch according to claim 1, **characterized in, that** the springy element is a spring wire.

4. Sunblind drive with at least one cam plate for actuating a switching function, **characterized in, that** the cam plate is connected to the drive via a friction clutch according to claim 1.

## Patentansprüche

1. Reibungskupplung zum Verbinden einer ersten Welle oder Scheibe (ID) mit einer zweiten Welle oder Scheibe (OD) mit begrenztem Kraftmoment, bei der die Wellen oder Scheiben (ID, OD) koaxial ineinander angeordnet sind, unter Einschluss eines federnden Elements (SE), das beide Wellen oder Scheiben verbindet, bei der das federnde Element (SE) sich zwischen der ersten Welle oder Scheibe (ID) und der zweiten Welle oder Scheibe (OD) befindet und als gewellte Linie in einer Schnittebene erscheint, die senkrecht zur gemeinsamen Achse liegt und beinahe den gesamten Umfang einnimmt.

2. Reibungskupplung gemäß Anspruch 1, **dadurch gekennzeichnet, dass** das federnde Element (SE) ein federndes Metallblech ist, das in Richtung der gemeinsamen Achse gewellt ist.

3. Reibungskupplung gemäß Anspruch 1, **dadurch gekennzeichnet, dass** das federnde Element ein Federdraht ist.

4. Jalousieantrieb mit mindestens einer Nockenplatte zum Betätigen einer Schaltfunktion, **dadurch gekennzeichnet, dass** die Nockenplatte über eine Reibungskupplung gemäß Anspruch 1 mit dem Antrieb verbunden ist.

## Revendications

1. Embrayage à friction permettant de coupler un premier arbre ou disque (ID) à un second arbre ou disque (OD) avec un moment de force limité, dans lequel les arbres ou les disques (ID, OD) sont agencés les uns dans les autres d'une manière coaxiale, incluant un élément élastique (SE) raccordant à la fois les arbres et les disques, dans lequel l'élément élastique (SE) est situé entre le premier arbre ou disque (ID) et le second arbre ou disque (OD) et apparaît comme une ligne ondulée dans un plan de coupe perpendiculaire à l'axe commun et couvrant pratiquement l'intégralité de la circonférence.

2. Embrayage à friction selon la revendication 1, **caractérisé en ce que** l'élément élastique (SE) est une tôle métallique élastique ondulée dans la direction de l'axe commun.

3. Embrayage à friction selon la revendication 1, **caractérisé en ce que** l'élément élastique est un fil à ressort.

4. Entraînement de jalousie muni d'au moins un disque à came permettant d'activer une fonction de commutation, **caractérisé en ce que** le disque à came est raccordé à l'entraînement par l'intermédiaire d'un embrayage à friction selon la revendication 1.
